# EUROPEAN PATENT SPECIFICATION

(11) **EP 3 129 680 B1**
(45) Date of publication and mention of the grant of the patent: **26.08.2020**
(21) Application number: 15776679.1
(22) Date of filing: 09.04.2015
(51) Int. Cl.: F16H 48/20

(54) **HYDRAULIC CONTROL UNIT FOR A LIMITED SLIP DIFFERENTIAL**
HYDRAULISCHE STEUERUNGSEINHEIT FÜR EIN SPERRDIFFERENZIAL
UNITÉ DE COMMANDE HYDRAULIQUE POUR DIFFÉRENTIEL À GLISSEMENT LIMITÉ

(30) Priority: 11.04.2014 US 201461978413 P
(43) Date of publication of application: 15.02.2017
(73) Proprietor: Eaton Corporation, Cleveland, OH 44122 (US)
(72) Inventor: FISHER, Daniel P., Coldwater, MI 49036 (US); EDLER, Andrew N., Homer, MI 49245 (US); BESEMER, Scott M., Grand Rapids, MI 49544 (US); OESCH, Jeffrey A., Marshall, MI 49068 (US)
(74) Representative: Schwan Schorer & Partner mbB
(86) International application number: PCT/US2015/025096
(87) International publication number: WO 2015/157511

(56) References cited:
- CN-A- 101 275 659
- DE-A1- 3 524 615
- US-A- 4 738 595
- US-A- 5 827 145
- US-A1- 2002 103 053
- US-A1- 2005 167 228
- US-A1- 2006 283 319
- US-A1- 2009 138 166
- US-A1- 2012 085 451

## Description

### FIELD

The present disclosure relates generally to limited slip differentials and more particularly to a hydraulic control unit that delivers hydraulic fluid to a limited slip differential.

### BACKGROUND

Differentials are provided on vehicles to permit an outer drive wheel to rotate faster than an inner drive wheel during cornering as both drive wheels continue to receive power from the engine. While differentials are useful in cornering, they can allow vehicles to lose traction, for example, in snow or mud or other slick mediums. If either of the drive wheels loses traction, it will spin at a high rate of speed and the other wheel may not spin at all. To overcome this situation, limited-slip differentials were developed to shift power from the drive wheel that has lost traction and is spinning to the drive wheel that is not spinning.

Electronically-controlled, limited-slip differentials can include a hydraulically-actuated clutch to limit differential rotation between output shafts of the differential. In some configurations a hydraulic delivery device may be located remote from the differential. In some examples it is challenging to mount the hydraulic delivery device relative to the differential and/or housing that accepts the differential. Further, it can be challenging to connect the hydraulic coupling between the hydraulic delivery device and the limited-slip differential.

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

DE 35 24 615 A1 relates to a system according to the preamble of claim 1, including a hydraulic control unit and a limited slip differential. US 2006/0283319 A1 to a hydraulic control unit for a limited slip differential assembly, comprising a gerotor pump and a hydraulic accumulator having a piston which is biased by a gas charge of the accumulator reservoir. US 4,738,595 relates to a hydraulic pump assembly comprising a sump piston, a pump piston and an accumulator piston for use in anti-lock braking systems.

### SUMMARY

The invention relates to a system, including a hydraulic control unit that delivers hydraulic fluid to a limited slip differential, as defined in claim 1.

According to additional features the hydraulic control unit housing further includes a hydraulic control unit housing mounting structure having first and second receiving bores that both define a first diameter. A first pair of first fasteners that both define a second diameter, less than the first diameter, couple the hydraulic control unit to an axle housing that houses the limited slip differential. A hydraulic coupling can have a first end that is received by a first receiving bore defined on the hydraulic control unit housing. The hydraulic coupling can have a second end that is configured to be received by a second receiving bore defined on a hydraulic port associated with the limited slip differential. At least one o-ring can be disposed around the second end that sealingly engages the second receiving bore. The hydraulic coupling can be configured to extend through a hydraulic coupler receiving bore define in the axle housing.

According to other features, the axle housing can define an inner diameter that is greater than an outer diameter of the hydraulic coupling. The hydraulic coupling is permitted to locate at a plurality of positions relative to the inner diameter of the axle housing during assembly of the hydraulic control unit to the limited slip differential to accommodate a corresponding plurality of positions of the differential relative to the axle housing. First and second mounting members can respectively comprise (i) third and fourth receiving bores, and (ii) first and second mounting passages. A second pair of first fasteners can respectively extend through the third and fourth receiving bores coupling the hydraulic control unit to the axle housing.

According to still other features, a pair of second fasteners can extend through the first and second mounting passages and mate with the hydraulic control unit housing to couple the first and second mounting members thereat. The hydraulic control unit can be pre-filled with hydraulic fluid prior to coupling to the axle housing. The biasing assembly can further comprise a first biasing member having a first spring rate and a second biasing member having a second spring rate. The first and second spring rates can be distinct.

According to additional features, at least one o-ring can be disposed around the second end that sealingly engages the second receiving bore. The hydraulic coupling can be configured to extend through a hydraulic coupler receiving bore defined in the axle housing. The axle housing can define an inner diameter that is greater than an outer diameter of the hydraulic coupling. The hydraulic coupling is permitted to locate at a plurality of positions relative to the inner diameter of the axle housing during assembly of the hydraulic control unit to the limited slip differential to accommodate a corresponding plurality of positions of the differential relative to the axle housing.

According to other features, the hydraulic control unit housing can further include a hydraulic control unit housing mounting structure having first and second receiving bores that both define a first diameter. A first pair of first fasteners that both define a second diameter, less than the first diameter, couple the hydraulic control unit to an axle housing that houses the limited slip differential. First and second mounting members can respectively comprise (i) third and fourth receiving bores, and (ii) first and second mounting passages. A second pair of first fasteners, respectively, extend through the third and fourth receiving bores coupling the hydraulic control unit to the axle housing. The third receiving bore is transverse to the first mounting passage. The fourth receiving bore is transverse to the second mounting passage.

According to other features, a pair of second fasteners can extend through the first and second mounting passages and mate with the hydraulic control unit housing to couple the first and second mounting members thereat. The hydraulic control unit can be pre-filled with hydraulic fluid prior to coupling to the axle housing. The biasing assembly can further comprise a first biasing member having a first spring rate and a second biasing member having a second spring rate. The first and second spring rates can be distinct.

### BRIEF DESCRIPTION OF THE DRAWINGS

The present disclosure will become more fully understood from the detailed description and the accompanying drawings, wherein:
FIG. 1 is a front perspective view of a hydraulic control unit constructed in accordance to one example of the present disclosure and shown assembled onto an axle housing;
FIG. 2 is a cross-sectional view of the hydraulic control unit of FIG. 1 taken along lines 2-2;
FIG. 3 is a cross-sectional view of the hydraulic control unit of FIG. 2 taken along lines 3-3;
FIG. 4 is a detail view of an attachment area of the hydraulic control unit of FIG. 1;
FIG. 5 is a cross-sectional view of the hydraulic control taken along lines 5-5 of FIG. 2 and taken at a high pressure port illustrating an anti-rotation component;
FIG. 6 is an exploded perspective view of the hydraulic control unit and the axle housing; and
FIG. 7 is a front perspective view of the hydraulic control unit of FIG. 1 and shown with various fasteners exploded for illustration.

### DETAILED DESCRIPTION

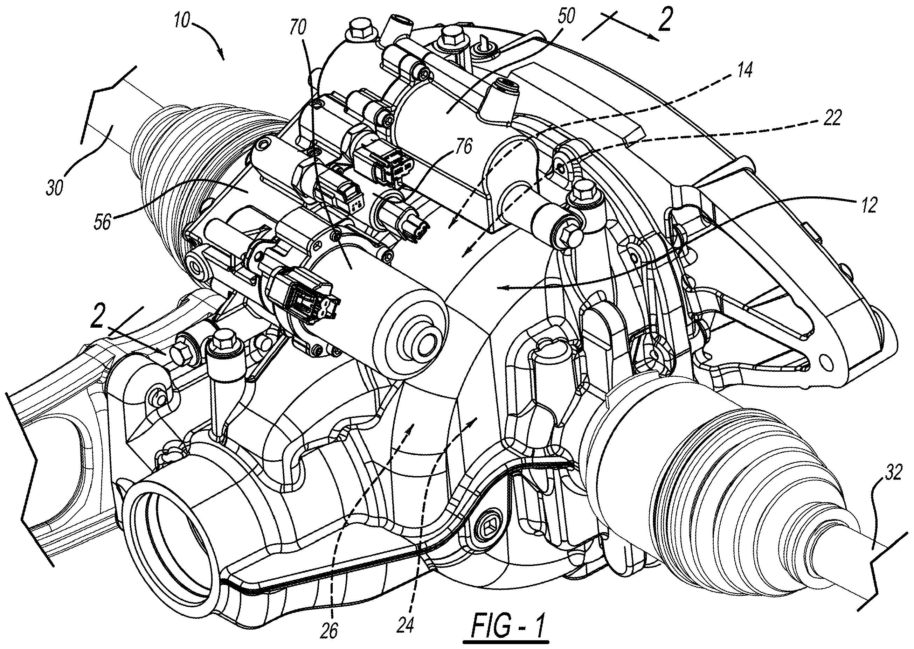

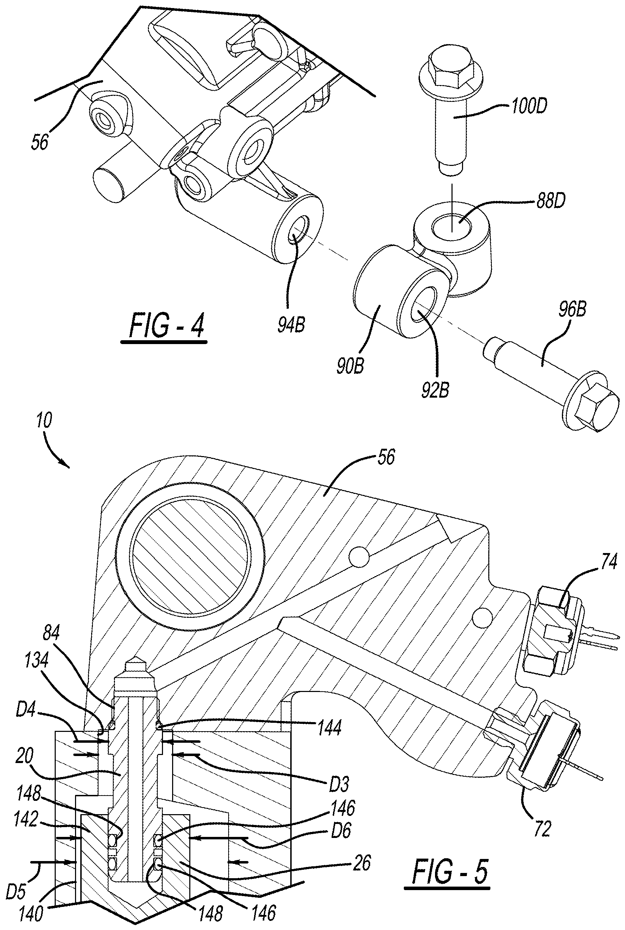

With initial reference to FIG. 1, a hydraulic control unit constructed in accordance to one example of the present disclosure is shown and generally identified with reference numeral 10. As will become appreciated herein, the hydraulic control unit 10 according to the present disclosure provides a single unit that can be mounted against or relative to an axle housing 12. The configuration allows for simple assembly and setup. In general, the hydraulic control unit 10 can deliver hydraulic fluid to a limited slip differential 14 housed in the axle housing 12 through a hydraulic coupling 20 (FIG. 5). The limited slip differential 14 can be an electronic limited slip differential having a clutch 22 and a piston (not specifically shown).

The limited slip differential 14 can operate to drive a pair of axle shafts 30, 32 that are connected to a pair of respective drive wheels (not shown). In general, the limited slip differential 14 functions as a traditional open differential during normal operating conditions until an event occurs where a bias torque is required. When a loss in traction is detected or anticipated, the clutch 22 can be selectively actuated in order to generate the optimum bias ratio for the situation.

The limited slip differential 14 can further include a differential gear assembly 24 configured in a differential case 26 that acts to allow the axle shafts 30, 32 to rotate at different speeds. The differential gear assembly 24 can include a pair of side gears (not specifically shown) that are mounted for rotation with the axle shafts 30 and 32 (and the drive wheels). In an open configuration, described below, the differential gear assembly acts to allow the axle shafts 30 and 32 to rotate at different speeds.

The clutch 22 couples a drive shaft output with the differential gear assembly 24. The clutch 22 can include a clutch pack (not specifically shown) that has a plurality of annular plates interleaved between a plurality of annular friction disks. The plurality of annular plates and annular friction disks are interleaved between one another and act to rotate past one another in substantially non-contacting relationship when the clutch 22 is in its open position. However, it will be appreciated by those skilled in the art that the term "non-contacting" as used herein is relative and is not meant to necessarily indicate that the annular plates and annular friction disks have absolutely no contact when the clutch 22 is in the open condition. The annular plates and annular friction disks are axially movable into frictional engagement relative to one another, thereby reducing relative rotation between the annular plates and annular friction disks when the clutch 22 is in the closed or partially closed configurations. In this manner, when the clutch 22 is in its closed position, the side gears, as well as the axle shafts and the drive wheels rotate together.

The clutch 22 can operate in an open configuration to allow the side gears to rotate independently from each other, e.g., at different speeds. The clutch 22 can also operate in a closed or partially closed configuration where the side gears rotate together or partially together (that is, not independently), e.g., at substantially the same speed. The clutch 22 is a hydraulic clutch that utilizes pressurized hydraulic fluid provided through the hydraulic fluid coupling 20 from the hydraulic control unit 10 to act on the piston to selectively actuate the clutch pack between the open, closed and partially closed configurations. It will be appreciated that the limited slip differential 14 described above is merely exemplary. In this regard, the hydraulic control unit 10 can be used to deliver hydraulic fluid to an actuator (piston, etc.) of any limited slip differential configuration.

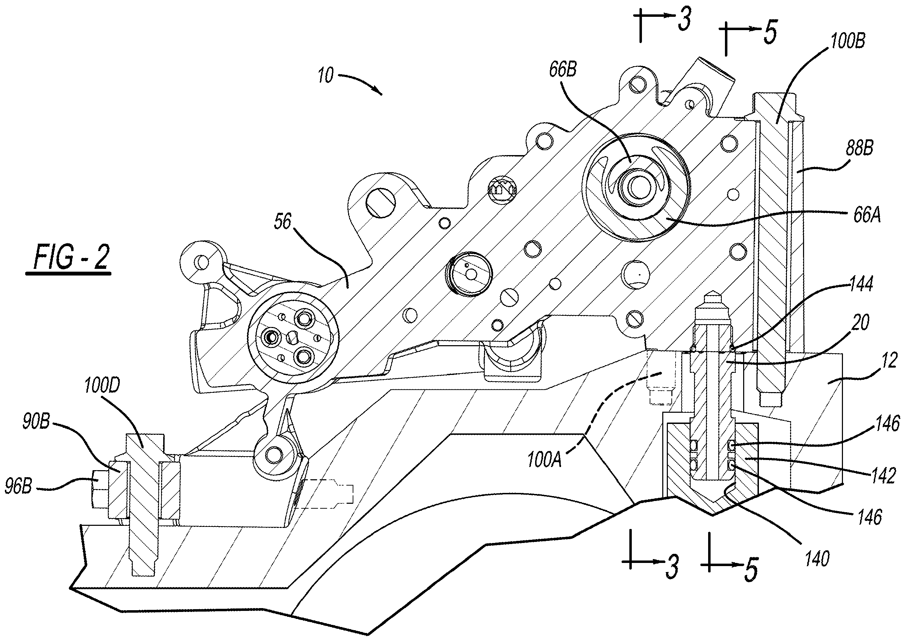

With general reference now to FIGS. 1-7, the hydraulic control unit 10 will be described in greater detail. The hydraulic control unit 10 can generally include a hydraulic control unit housing 50 having an accumulator housing portion 54 and a housing manifold portion 56. The accumulator housing portion 54 can define an accumulator chamber 64 with the piston 67. The accumulator housing portion 54 houses first and second biasing members 66A, 66B and a piston 67. The first and second biasing members 66A and 66B can be collectively referred to herein as a biasing assembly 68. The first biasing member 66A has a first spring rate while the second biasing member 66B has a second spring rate. The first and second spring rates cooperate together to provide a desired spring rate for the biasing assembly 68. As will become appreciated herein, fluid is pumped behind the piston 67 into the accumulator chamber 64 to cause the piston 67 to translate toward the first and second biasing members 66A, 66B.

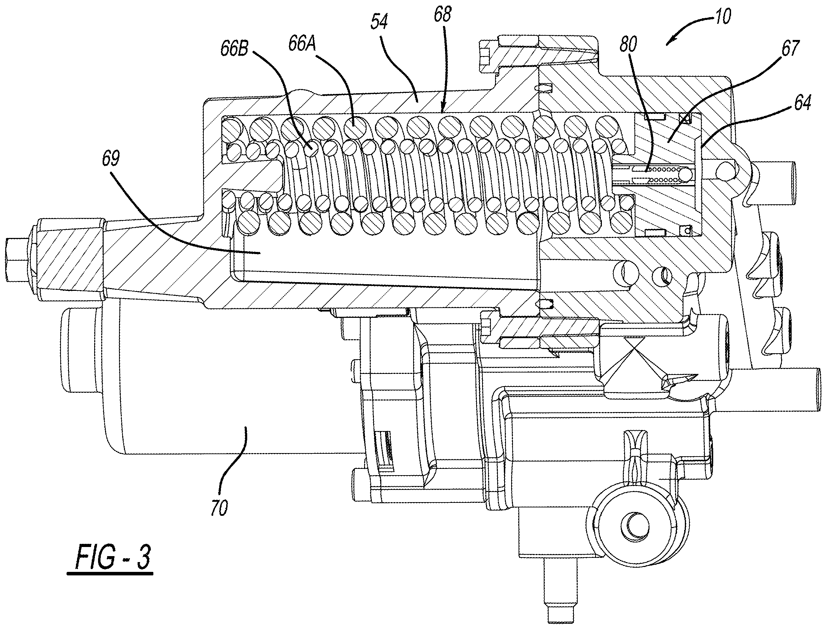

In the hydraulic control unit 10 of the present disclosure, the accumulator chamber 64 houses the biasing members 66A, 66B and also provides a hydraulic sump 69 (FIG. 3). Such a configuration allows for reduced packaging space. The housing manifold portion 56 can define various fluid passages configured to provide access to various sensors disclosed herein. The hydraulic control unit 10 can also comprise a motor 70 can be coupled to the hydraulic control unit housing 50.

The hydraulic control unit 10 can further include a clutch piston pressure sensor 72 (FIG. 5), an accumulator pressure sensor 74 and a three-way proportional regulating valve 76. The clutch piston pressure sensor 72 can be threadably or otherwise securely received by the hydraulic control unit housing 50. The clutch piston pressure sensor 72 can be configured to measure a pressure at the piston of the limited slip differential 14. The accumulator pressure sensor 74 can be threadably or otherwise securely received by the hydraulic control unit housing 50. The accumulator pressure sensor 74 can be configured to measure a pressure in the accumulator chamber 64. The three-way proportional regulating valve 76 can be securely coupled to the hydraulic control unit housing 50. The three-way proportional regulating valve 76 can be configured to regulate fluid pressure within the unitary hydraulic control unit housing 50.

The motor 70 can operate a piston pump or gerotor gear assembly and can be conventionally constructed. The gerotor gear assembly can comprise an inner gerotor gear and an outer gerotor gear. The operation of the gerotor gear assembly can be conventional where relative rotation of the inner and outer gerotor gears can cause a pumping action on the fluid contained in the hydraulic control unit housing 50. In examples where a piston pump is used, the piston pump can cause a pumping action on the fluid contained in the hydraulic control unit housing 50. The pumping action ultimately causes the fluid to be pumped into the accumulator chamber 64 (that shares a common space with the sump 69). The pumping action ultimately causes the fluid to be pumped into the accumulator chamber 64. In doing so, the biasing members 66A, 66B at least partially collapse and introduces a pre-charge into the system. In this regard, the motor 70 is not required to run constantly. The fluid pressure can be introduced into the limited slip differential 12 by the biasing members 66A, 66B acting on the piston 67. A pressure relief valve 80 can be provided in the piston 67. The pressure relief valve 80 can protect the system by releasing fluid in the event of an over pressure malfunction.

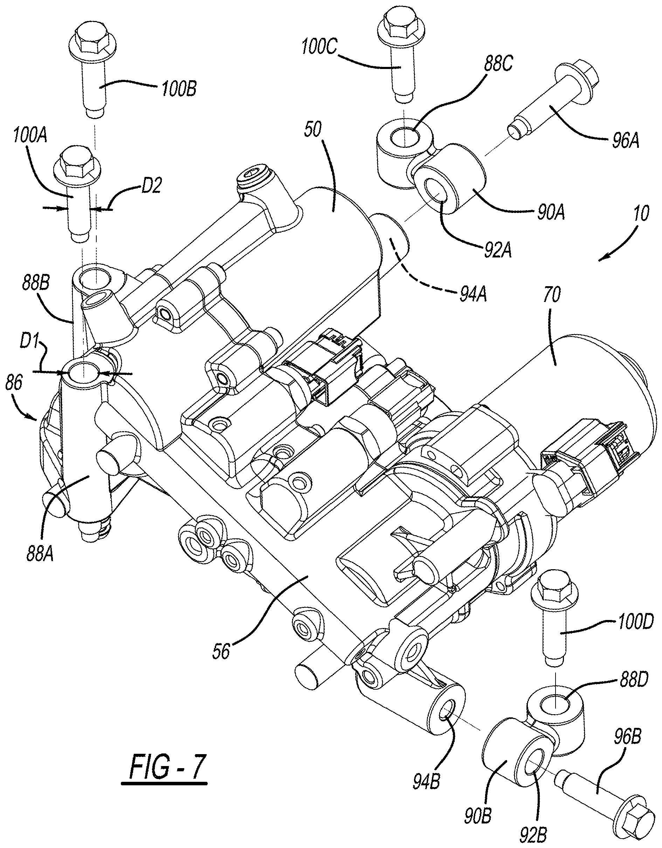

With specific reference now to FIGS. 4-7, additional features of the hydraulic control unit housing 50 will be described. The hydraulic control unit housing 50 can define a receiving bore 84 (FIG. 5) that is configured to receive the hydraulic coupling 20. The hydraulic control unit housing 50 can include a hydraulic control unit housing mounting structure collectively identified at reference numeral 86. The hydraulic control unit housing mounting structure 86 can generally include a first, second, third and fourth receiving bores 88A, 88B, 88C and 88D. The first, second, third and fourth receiving bores 88A, 88B, 88C and 88D can define a first diameter D1 (FIG. 7). In the example shown, the third and fourth receiving bores 88C and 88D can be formed on mounting members 90A and 90B, respectively. The mounting members 90A and 90B can define mounting passages 92A and 92B, respectively that are configured in an orientation generally transverse to the receiving bores 88C and 88D. The mounting passages 92A and 92B can align with connecting bores 94A and 94B formed in the housing manifold portion 56.

First fasteners 96A and 96B can extend through the mounting passages 92A and 92B and threadably mate with the connecting bores 94A and 94B. The first fasteners 96A and 96B couple the mounting members 90A and 90B to the housing manifold portion 56. Second fasteners 100A, 100B, 100C and 100D can extend through the receiving bores 88A, 88B, 88C and 88D. The second fasteners 100A, 100B, 100C and 100D can have an outer diameter D2 (FIG. 7). The outer diameter D2 is less than the first diameter D1 to allow for misalignment during assembly as will become appreciated herein.

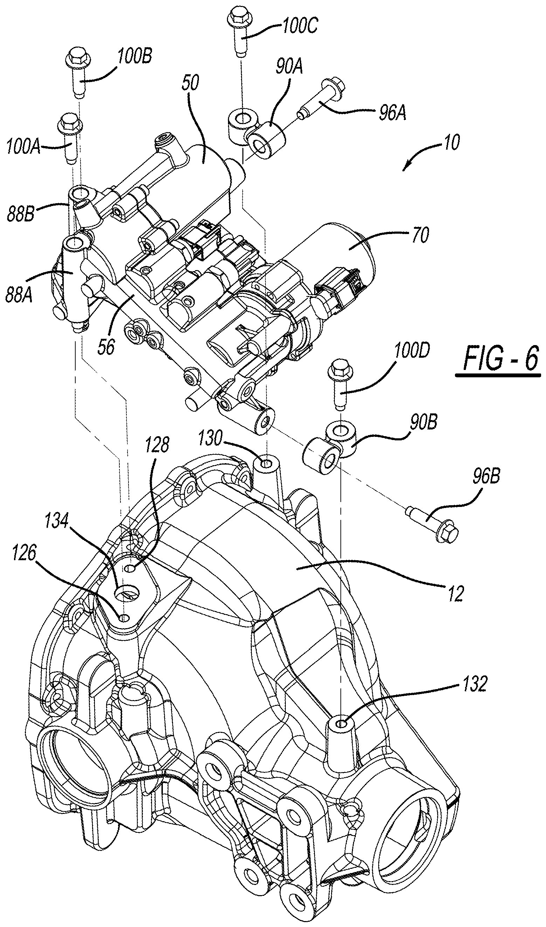

With particular reference to FIG. 6, the axle housing 12 defines a first mounting bore 126, a second mounting bore 128, a third mounting bore 130, a fourth mounting bore 132 and a hydraulic coupling receiving bore 134. In general, the hydraulic coupling receiving bore 134 is configured to accept the hydraulic coupling 20. In the example shown, the hydraulic coupling receiving bore 134 defines a diameter D3 that is larger than a diameter D4 of the hydraulic coupling 20 to allow the hydraulic coupling 20 to suitably locate onto a receiving bore 140 defined on a hydraulic port 142 provided by the differential case 26. Further, as described below, the differential case 26 may move within the axle housing 12 during shimming. In this regard an inner diameter D5 defined on the axle housing 12 is larger than an outer diameter D6 of a hydraulic port 142 extending from the differential case 26. In this regard, the hydraulic control unit 10 will self-locate into the hydraulic coupling receiving bore 134 and the receiving bore 140. The second fastener 100A can threadably mate with the first mounting bore 126. The second fastener 100B can threadably mate with the second mounting bore 128. The third fastener 100C can threadably mate with the third mounting bore 130. The third fastener 100D can threadably mate with the fourth mounting bore 132.

During assembly of the differential assembly 14 into the axle housing 12, the limited slip differential 14 is shimmed relative to the axle housing 12 to account for a predetermined amount of backlash. During shimming, the limited slip differential 14 may more left or right (toward and away from the axle shafts 30 and 32). In this regard, the location of the receiving bore 140 defined on the hydraulic port 142 may not always be in the same location. The dimension of the hydraulic coupling receiving bore 134 (inner diameter D3) allows the hydraulic coupling 20 to properly align for receipt into the receiving bore 140 while still being connected to the hydraulic control unit housing 50. The hydraulic coupling 20 is permitted to locate at a plurality of positions relative to the inner diameter D3 of the axle housing 12 during assembly of the hydraulic control unit 10 to the limited slip differential 26 to accommodate a corresponding plurality of positions of the differential 26 relative to the axle housing 12. A first o-ring 144 can sealingly locate between the hydraulic coupling 20 and the housing manifold portion 56. The hydraulic coupling can further include second o-rings 146 received in grooves 148. The second o-rings 146 sealingly engage the receiving bore 140.

Once the hydraulic coupler 20 is suitably received by the hydraulic port 142, and acceptable alignment is attained, the second fasteners 100A and 100B can be tightened to a fixed position with the first and second mounting bores 126 and 128 of the axle housing 12. Notably, the receiving bores 88A and 88B have a greater diameter than the second fasteners 100A and 100B allowing for lateral movement of the housing manifold portion 56 relative to the axle housing 12 prior to tightening the second fasteners 100A and 100B into the respective first and second mounting bores 126 and 128. The second fasteners 100C and 100D can then be tightened into the third and fourth mounting bores 130 and 132. The 88C and 88D can have a greater diameter than the second fasteners 100C and 100D to allow for misalignment resulting from the first and second fasteners 100A and 100B fixing the housing manifold portion 56 relative to the axle housing 12.

The hydraulic coupling 20 can provide anti-rotation properties that inhibit rotation of the hydraulic coupling 20 around its axis in the installed position. In one configuration, the hydraulic control unit 10 may be pre-filled with hydraulic fluid prior to coupling to the axle housing 12. A seal (not specifically shown) may be implemented at an interface between the hydraulic coupling 20 and the hydraulic coupling receiving bore 134 and/or the receiving bore 140. Such seal may be punctured during the act of locating the hydraulic coupling 20 into the hydraulic coupling receiving bore 134 and/or the receiving bore 140.

The foregoing description of the examples has been provided for purposes of illustration and description. It is not intended to be exhaustive.

## Claims

1. A system including a hydraulic control unit (10) that delivers hydraulic fluid to a limited slip differential (14) of the system, the hydraulic control unit comprising:
a hydraulic control unit housing (50) having an accumulator housing portion (54) that houses a biasing assembly (68) and a piston (67), the accumulator housing portion forming an accumulator chamber (64) with the piston;
a sump (69) defined in the hydraulic control unit housing and that at least partially occupies a common space with the accumulator housing portion; and
a motor (70) that operates a piston pump or gerotor gear assembly for pumping fluid into the accumulator chamber of the accumulator housing portion;
wherein the fluid pumped into the accumulator housing portion at least partially collapses the biasing assembly and introduces a pre-charge into the hydraulic control unit, wherein the biasing assembly is configured to expand and urge the piston in a first direction resulting in fluid being communicated from the hydraulic control unit and into the limited slip differential,
**characterized in that** the hydraulic control unit housing further includes a hydraulic control unit housing mounting structure (86) having first and second receiving bores (88A, 88B) that both define a first diameter, wherein a first pair of first fasteners (96A, 96B) that both define a second diameter, less than the first diameter, couple the hydraulic control unit to an axle housing (12) of the system that houses the limited slip differential;
the system further comprising a hydraulic coupling (20) that has a (i) first end that is received by a hydraulic coupling receiving bore (134) defined on the hydraulic control unit housing and (ii) a second end that is configured to be received by a second receiving bore (140) defined on a hydraulic port (142) associated with the limited slip differential.

2. The system of claim 1 wherein the hydraulic control unit (10) further comprises at least one o-ring (144) disposed around the second end that sealingly engages the second receiving bore (140).

3. The system of claim 1 wherein the axle housing (12) defines an inner diameter that is greater than an outer diameter of the hydraulic coupling (20), wherein the hydraulic coupling is permitted to locate at a plurality of positions relative to the inner diameter of the axle housing during assembly of the hydraulic control unit (10) to the limited slip differential (14) to accommodate a corresponding plurality of positions of the differential relative to the axle housing.

4. The system of claim 1, further comprising first and second mounting members (90A, 90B) that respectively comprise (i) third and fourth receiving bores (88C, 88D), and (ii) first and second mounting passages (92A, 92B), wherein a second pair of first fasteners (96A, 96B) respectively extend through the third and fourth receiving bores coupling the hydraulic control unit (10) to the axle housing (12);
the hydraulic control unit preferably further comprising a pair of second fasteners (100A, 100B) that extend through the first and second mounting passages and mate with the hydraulic control unit housing (50) to couple the first and second mounting members thereat.

5. The hydraulic control unit of claim 1 wherein the biasing assembly (68) further comprises:
a first biasing member (66A) having a first spring rate; and
a second biasing member (66B) having a second spring rate, wherein the first and second spring rates are distinct.

## Patentansprüche

1. System mit einer hydraulischen Steuereinheit (10), welche hydraulisches Fluid an ein Sperrdifferential (14) des Systems abgibt und versehen ist mit:
einem Hydrauliksteuereinheitgehäuse (50) mit einem Speichergehäuseabschnitt (54), der eine Vorspannbaugruppe (68) und einen Kolben (67) aufnimmt und mit dem Kolben eine Speicherkammer (64) bildet;
einem Sumpf (69) in dem Hydrauliksteuereinheitgehäuse, der mindestens zum Teil einen gemeinsamen Raum mit dem Speichergehäuseabschnitt ausfüllt; und
einem Motor (70), der eine Kolbenpumpe oder eine Gerotorgetriebebaugruppe antreibt, um Fluid in die Speicherkammer des Speichergehäuseabschnitts zu pumpen;
wobei das in den Speichergehäuseabschnitt gepumpte Fluid die Vorspannbaugruppe mindestens zum Teil zum Kollabieren bringt und eine Vorladung in die Hydrauliksteuereinheit einführt, wobei die Vorspannungsbaugruppe ausgebildet ist, um zu expandieren und den Kolben in eine erste Richtung zu zwingen, wodurch Fluid von der Hydrauliksteuereinheit in das Sperrdifferential kommuniziert wird,
**dadurch gekennzeichnet, dass** das Hydrauliksteuereinheitgehäuse ferner eine Hydrauliksteuereinheitgehäuse-Befestigungsstruktur (86) mit ersten und zweiten Aufnahmebohrungen (88A, 88B) aufweist, die beide einen ersten Durchmesser festlegen, wobei ein erstes Paar erster Befestigungselemente (96A, 96B), die beide einen zweiten Durchmesser festlegen, der kleiner ist als der erste Durchmesser, die Hydrauliksteuereinheit an ein Achsgehäuse (12) des Systems koppeln, welches das Sperrdifferential aufnimmt;
wobei das System ferner eine Hydraulikkupplung (20) aufweist, die (i) ein erstes Ende, welches von einer Hydraulikkupplungaufnahmebohrung (134) aufgenommen wird, die auf dem Hydrauliksteuereinheitgehäuse ausgebildet ist, sowie (ii) ein zweites Ende aufweist, welches ausgebildet ist, um von einer zweiten Aufnahmebohrung (140) aufgenommen zu werden, die auf einem Hydraulikanschluss (142)ausgebildet ist, welcher mit dem Sperrdifferential assoziiert ist.

2. System gemäß Anspruch 1, wobei die Hydrauliksteuereinheit (10) ferner mindestens einen O-Ring (144) aufweist, der um das zweite Ende herum angeordnet ist, welches in dichtendem Eingriff mit der zweiten Aufnahmebohrung (140) steht.

3. System gemäß Anspruch 1, wobei das Achsgehäuse (12) einen Innendurchmesser aufweist, der größer als ein Außendurchmesser der Hydraulikkupplung (20) ist, wobei es der Hydraulikkupplung gestattet ist, während der Montage der Hydrauliksteuereinheit (10) an dem Sperrdifferential (14) eine Mehrzahl von Positionen relativ zu dem Innendurchmesser des Achsgehäuses einzunehmen, um eine entsprechende Mehrzahl von Positionen des Differentials relativ zu dem Achsgehäuse auszugleichen.

4. System gemäß Anspruch 1, ferner versehen mit ersten und zweiten Befestigungsbauteilen (90A, 90B), die jeweils (i) dritte und vierte Aufnahmebohrungen (88C, 88D) und (ii) erste und zweite Befestigungsdurchlässe (92A, 92B) aufweisen, wobei sich ein zweites Paar der ersten Befestigungselemente (96A, 96B) jeweils durch die dritten und vierten Aufnahmebohrungen erstreckt, welche die Hydrauliksteuereinheit (10) mit dem Achsgehäuse (12) koppeln;
wobei die Hydrauliksteuereinheit vorzugsweise ferner ein Paar zweite Befestigungselemente (100A, 100B) aufweist, welche sich durch die ersten und zweiten Befestigungsdurchlässe erstrecken und zu dem Hydrauliksteuereinheitgehäuse (50) passen, um die ersten und zweiten Befestigungsbauteile damit zu koppeln.

5. Hydrauliksteuereinheit gemäß Anspruch 1, wobei die Vorspannbaugruppe (68) ferner verstehen ist mit:
einem ersten Vorspannglied (66A) mit einer ersten Federhärte; und
einem zweiten Vorspannglied (66B) mit einer zweiten Federhärte, wobei sich die erste und zweite Federhärte unterscheiden.

## Revendications

1. Système comprenant une unité de commande hydraulique (10) qui distribue du fluide hydraulique à un différentiel à glissement limité (14) du système, l'unité de commande hydraulique comprenant :
un boîtier d'unité de commande hydraulique (50) ayant une partie de boîtier d'accumulateur (54) qui loge un ensemble de sollicitation (68) et un piston (67), la partie de boîtier d'accumulateur formant une chambre d'accumulateur (64) avec le piston ;
un carter d'huile (69) défini dans le boîtier d'unité de commande hydraulique et qui occupe au moins partiellement un espace commun avec la partie de boîtier d'accumulateur ; et
un moteur (70) qui actionne une pompe de piston ou un ensemble d'engrenages de pompe à rotor pour pomper le fluide dans la chambre d'accumulateur de la partie de boîtier d'accumulateur ;
dans lequel le fluide pompé dans la partie de boîtier d'accumulateur replie au moins partiellement l'ensemble de sollicitation et introduit une pré-charge dans l'unité de commande hydraulique, dans lequel l'ensemble de sollicitation est configuré pour dilater et pousser le piston dans une première direction se traduisant par le fluide qui communique de l'unité de commande hydraulique dans le différentiel à glissement limité,
**caractérisé en ce que** le boîtier d'unité de commande hydraulique comprend en outre une structure de montage de boîtier d'unité de commande hydraulique (86) ayant des premier et deuxième alésages de réception (88A, 88B) qui définissent tous deux un premier diamètre, dans lequel une première paire de premières fixations (96A, 96B) qui définissent tous deux un second diamètre, inférieur au premier diamètre, couplent l'unité de commande hydraulique à un boîtier d'essieu (12) du système qui loge le différentiel à glissement limité ;
le système comprenant en outre un couplage hydraulique (20) qui a (i) une première extrémité qui est reçue par un alésage de réception de couplage hydraulique (134) définit sur le boîtier d'unité de commande hydraulique et (ii) une seconde extrémité qui est configurée pour être reçue par un deuxième alésage de réception (140) défini sur un orifice hydraulique (142) associé avec le différentiel à glissement limité.

2. Système selon la revendication 1, dans lequel l'unité de commande hydraulique (10) comprend en outre au moins un joint torique (144) disposé autour de la seconde extrémité qui met en prise de manière étanche le deuxième alésage de réception (140).

3. Système selon la revendication 1, dans lequel le boîtier d'essieu (12) définit un diamètre interne qui est supérieur à un diamètre externe du couplage hydraulique (20), dans lequel le couplage hydraulique peut se positionner dans une pluralité de positions par rapport au diamètre interne du boîtier d'essieu pendant l'assemblage de l'unité de commande hydraulique (10) avec le différentiel à glissement limité (14) pour accepter une pluralité correspondante de positions du différentiel par rapport au boîtier d'essieu.

4. Système selon la revendication 1, comprenant en outre des premier et second éléments de montage (90A, 90B) qui comprennent respectivement (i) des troisième et quatrième alésages de réception (88C, 88D), et (ii) des premier et second passages de montage (92A, 92B), dans lequel une seconde paire de premières fixations (96A, 96B) s'étend respectivement à travers les troisième et quatrième alésages de réception couplant l'unité de commande hydraulique (10) au boîtier d'essieu (12) ;
l'unité de commande hydraulique comprenant en outre de préférence une paire de secondes fixations (100A, 100B) qui s'étend à travers les premier et second passages de montage et se couple avec le boîtier d'unité de commande hydraulique (50) afin d'y coupler les premier et second éléments de montage.

5. Unité de commande hydraulique selon la revendication 1, dans laquelle l'ensemble de sollicitation (68) comprend en outre :
un premier élément de sollicitation (66A) ayant une première constante de rappel ; et
un second élément de sollicitation (66B) ayant une seconde constante de rappel, dans laquelle les première et seconde constantes de rappel sont distinctes.
